## Europäisches Patentamt

(19) **European Patent Office**

**Office européen des brevets**

(11) Publication number: **0 055 561**

**A1**

(12) # EUROPEAN PATENT APPLICATION

(21) Application number: **81305951.6**

(22) Date of filing: **18.12.81**

(51) Int. Cl.³: **E 04 C 1/40**
**E 04 B 1/78, B 28 B 11/04**

(30) Priority: **20.12.80 GR 63729**
**07.12.81 GR 66725**

(43) Date of publication of application:
**07.07.82 Bulletin 82/27**

(84) Designated Contracting States:
**AT BE CH DE FR GB IT LI LU NL SE**

(71) Applicant: **Kothalis, George S.**
**Chrysoupolis**
**Kavala(GR)**

(72) Inventor: **Kothalis, George S.**
**Chrysoupolis**
**Kavala(GR)**

(74) Representative: **Marchant, James Ian et al,**
**Elkington and Fife High Holborn House 52/54 High**
**Holborn**
**London WC1V 6SH(GB)**

(54) Bricks having thermal insulation and a method for the production thereof.

(57) A clay brick of conventional design, for example pro-
vided with air channels 1, has at least one layer of heat
insulating material 2, e.g. polyurethane, permanently in-
corporated in the inside thereof. Alternatively the layer of
insulating material may be permanently incorporated on the
outside of the brick.

FIG.1

EP 0 055 561 A1

## BRICKS HAVING THERMAL INSULATION AND A METHOD FOR THE PRODUCTION THEREOF

This invention relates to a new type of brick which is particularly suitable for the construction of walls and which provide the wall with heat-insulation and sound insulation properties. This invention also relates to a method of producing the said bricks in a rapid and economic manner which is particularly adapted to mass production.

The production of bricks having many forms and sizes has been known since antiquity and consequently nothing has to be said here concerning the usefulness and the many applications of bricks. Most of the walls of all buildings of all kinds being constructed today, as well as some ceilings and floor slabs, are made using bricks together with cast concrete plates. The spectacular increase in the price of fuels during the last four years has in any case made it imperative to include in the said walls or plates an insulation layer, apart from the traditional mortar or coating layer and plaster which are present mainly for decorative reasons. The buildings will thus have the lowest possible heat losses and a smaller consumption of fuel or electricity will be needed for their heating (or cooling during the summer). The use of such insulation layers is now required by law in many countries, Greece being one of them.

This obligation is usually met today by erecting a double wall which includes a cavity of some centimeteres is left, and by placing an insulating material into this cavity. This insulating material is usually in the form of a slab or of a solid foamed block, which must be inserted between the two parts of the double wall. It is evident that this insertion necessitaes much extra work and it is impossible for it to be effected perfectly, i.e. air gaps or irregularities will always remain between the brick-work or plates and the insulation. In addition in some places the insulating material, due to its compressibility, will have a greater or smaller density, i.e. the insulating material will not be homogeneous.

The present invention obviates all of these problems in a perfectly simple and economic manner. The present invention provides a clay brick characterised in that one or more layers of heat insulating material are permanently incorporated in the inside and/or on the outside of the brick. Thus the brick according to the invention is provided during its manufacture in the factory with the necessary insulation layer. This layer may be placed, by injection or by pressing and glueing of the insulating material, into a suitable space formed in the middle and/or in other internal or external parts of the bricks, usually perpendicular to its width. Consequently, when a wall for example is being constructed by using the bricks of the invention, with the bricks put in rows one above the other and with the bricks put one on top of the other through their width (interposing of course the mortar for fixing the bricks in place as shown in Figure 15 of the drawings), the desired insulation layer will be automatically formed in the middle (or in any other desired place) of the brick-wall width (or in a concrete ceiling or plate) without any need to errect a second wall and to insert insulation slabs. The cost of this addiional work is thus avoided.

It is clear that the object of the invention mentioned above, i.e. the economic and rapid construction of insulated walls, can be fully achieved by the use of the bricks of the invention. Building supervisors or inspectors need no longer continuously check wheather the walls being built have been provided with insulation slabs and whether these slabs have been correctly positioned. The omission of such slabs because of oversight or fraud will be quite impossible. Supervisors or inspectors have simply to ascertain that bricks in accordance with this invention have been used for the building of a wall in order to be assured that the structure involved is consistent with the regulations about heat insulation of buildings.

Many insulating materials may be used for the production of the bricks of the invention, provided that they are capable of being injected (or pressed and glued) and set easily in the space in the interior of the brick provided for the purpose. It should be noted that the insulating material may also be coated on the outside of any type of known brick. Polyurethane has proved to be particularly suitable but the invention is by no means restricted to the use of this material. Other examples of insulating materials include polyvinyl chloride (PVC), Felisol and Bettocel. The heating insulating material will at the same time provide sound-proofing and contribute to noise supression in buildings built with the new type of brick according to the invention.

The present invention also provides a method for the production of clay bricks by moulding, firing and cooling the brick characterised in that the bricks are adjusted after firing to a suitable temperature for the incorporation of an insulating material, an insulating material is permanently incorporated in the inside and/or on the outside of the bricks by injection or pressing and glueing and the bricks are subsequently allowed to stand for a period of time sufficient for insulating material to set and/or become bonded to the clay.

The method of producing bricks according to the invention includes the following four steps in the case where polyurethane is used as insulating material:

a) The manufacturing of the bricks is carried out in known manner with the use of clay casting moulds and firing. There is no restriction on the shape and size of the bricks, provided that a space or gap is left in the middle and/or some other part of the brick with an adequate width for the insulation to be subsequently inserted. This width is determined in accordance with the coefficient of heat transmission (or of sound insulation) aimed at, as will be further explained later.

b) The bricks are then heated (or if needed cooled) so that they acquire a proper temperature for the insulating material which is to be inserted e.g. injected, to fully adhere to the clay sides inside the space in the bricks. For example, in the case of polyurethane this temperature is about 40°C.

c) Insertion, e.g. injection of the insulating material into the space in the bricks then follows. Any known device for this purpose may be used preferably with the bricks in an upright position. It is also possible to carry out injection with the bricks on their sides, provided appropriate measures are taken.

d) Finally, the bricks are allowed to stand for a period of about 20 hours, so that the insulating material will set and solidify completely. It is noted that during this time the bricks may be transported but should not be subjected to any major mechanical stresses, i.e. they must not be used for structural purposes.

It should be emphasised that this method is particularly suitable for an automated production line, with very important savings in manufacturing costs. Such automation is possible for example with the aid of conveyors e.g. in the form of endless belts, for the transport of the bricks, heating devices e.g. gas burners or hot air generators, devices for temporarily holding each brick so that it may receive an injection of polyurethane, a metering apparatus to set the quantity of polyurethane required for each injection, time switches to adjust the rate of advancement rate of the bricks, etc.. The whole automation system can be devised without difficulty by the skilled man and need not be described further herein. The possibility of automation of production offers to the inventive method a very important advantage.

The invention will now be described in more detail with the aid of the non limiting examples of embodiments shown in the accompanying drawings, in which:

Figure 1 shows a brick formed in accordance with the invention;

Figure 2 is a section of the brick in a plane perpendicular to its longitudinal axis of symmetry;

Figure 3 to 13 show a number of different forms of bricks according to the invention, which will be described later in more detail.

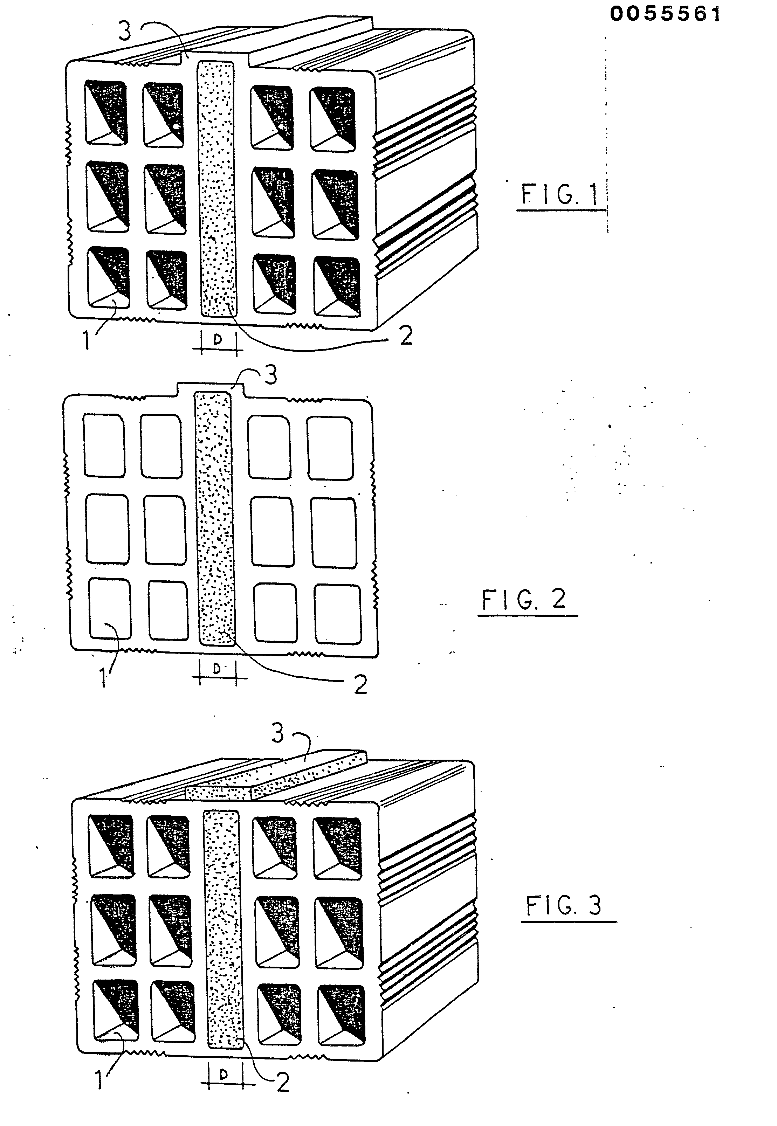

As shown in Figures 1 and 2, a brick according to the invention has the form of a rectangular parallelepiped with convention rectangular air channels 1 in the inside. The invention is not limited to the exact form of the brick and any known form of brick can be used provided that a longitudinal gap or a space is available in the middle of the brick or in some other part inside or outside the brick. The said longitidinal gap or space is shown in the Figures 1 and 2 as 2. The thickness D of this gap will be set in each case in accordance with the coefficient of heat transmission which is required. As described in more detail below Figures 3 to 12 show the application of the invention to other forms of brick.

Tests carried out by the Polytechnic Section of the University of Saloniki on bricks having dimensions 315 x 180 x 150 mm with an incorporated polyurethane insulation layer of D = 20 mm thickness, showed a coefficient of heat transmission equal to K = 0.65 Kcal/ $m^2$.h.°C (i.e. 0.65 Kilocalories per sq.meter, hour and degree Celcius). This value complies fully with the regulations for the heat insulation of buildings, if taken in conjuction with the heat transmission coefficients of conventional mortars and plasters used in the construction of walls. It is apparent that by increasing the gap thickness D of the bricks and consequently the insulation layer, the coefficient K can be decreased much more. It should also be noted, that with a layer of D = 60 mm a coefficient K = 0.34 Kcal/$m^2$.h.°C was obtained.

These spectacular results can be obtained in a simple way, only brick moulds of adequate dimensions being required.

These low coefficients of heat transmission allow the construction of much narrower walls in comparison with conventional walls in use at the present time, to provide the same heat insulation. Consequently, such walls will be also lighter. Thus, besides the saving obtained by use of such walls, there is an important finanical advantage in that the smaller static loads lead to savings in the expenses arising from the foundations and the load bearing structure as a whole.

Finally Figures 1 and 2 show that the top part of the brick may be provided with a rectangular or approximately semicircular protrusion 3, which will be incorporated within the mortar connecting successsive rows of bricks, e.g. in a brick masonry. Comparative measurements have established that this protrusion also contributes to an increase in thermal insulation.

As shown in Figure 3, instead of this protrusion it is possible to inject or glue insulating material onto the brick, in the form of a longitudinal strip, the brick also containing insulating material in its inside. In Figure 3 a strip form protrusion 3 is seen in the middle of the top of the brick, but this is not intended to limit the invention should construction requirements dictate a different arrangement.

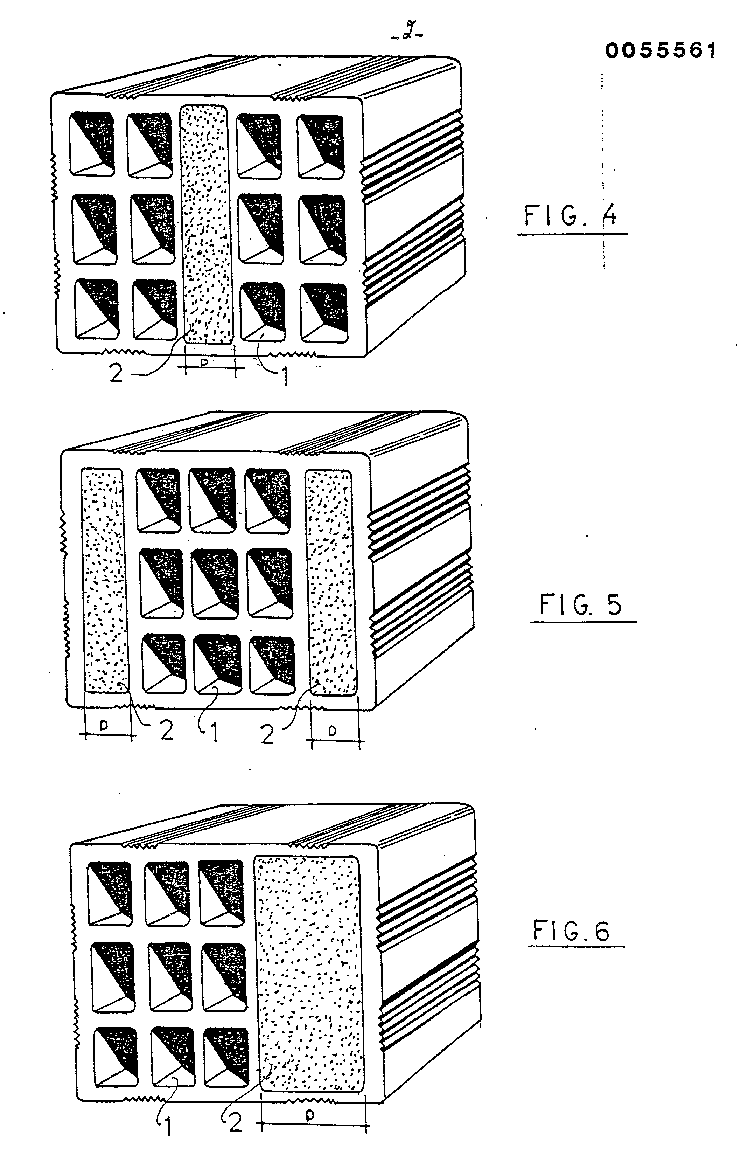

In cases where thickness D of the insulating material is sufficiently large to obtain the necessary heat transmission it is possible to omit the protrusion 3 completely, as shown in Figure 4. It should be emphasized however that the presence of the protrusion or strip 3 considerably decreases the thickness D required for the insulation in the interior of the bricks, to obtain the same coefficient of heat transmission.

In addition, as shown in Figures 5 and 6, respectively, it is possible either to split the insulating material core into two (or more) side layers or to place the insulating material at the side and not in the middle of the brick. The embodiments of Figures 5 and 6 may or may not contain the clay or insulating material protrusions, in accordance with Figures 2 and 3.

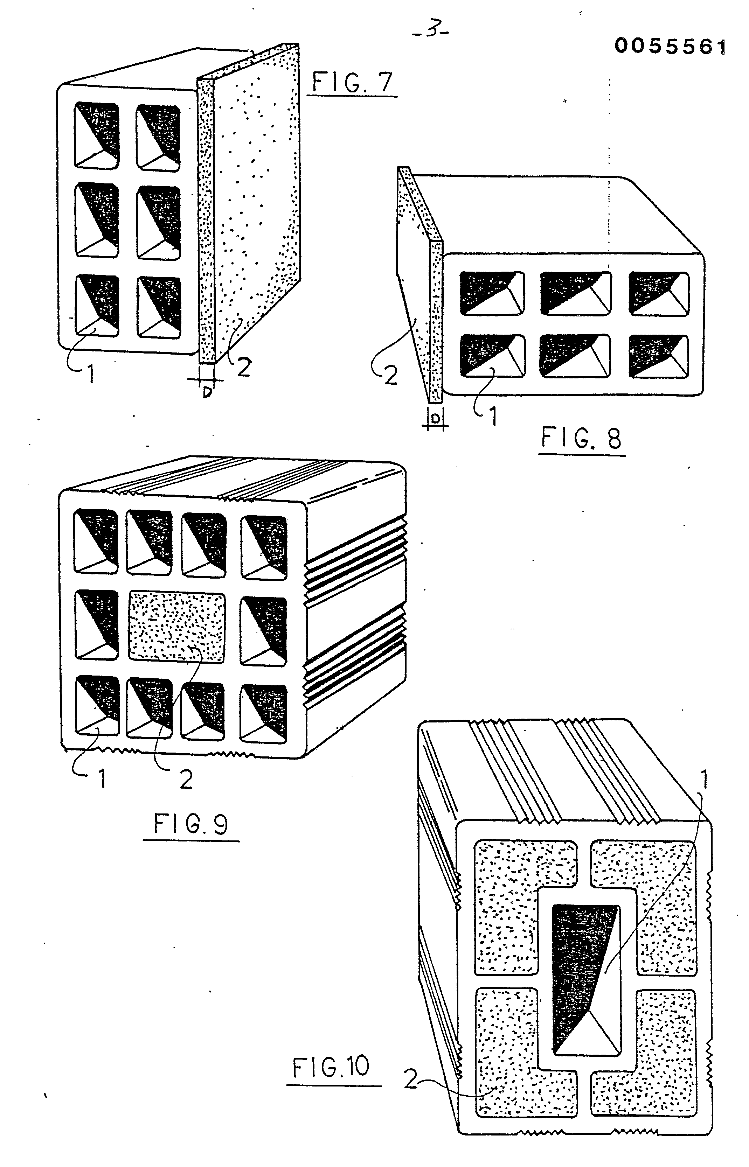

In Figures 7 and 8 an insulation layer is provided by injecting or glueing the insulation material at the side or top part of the brick, but outside its main body.

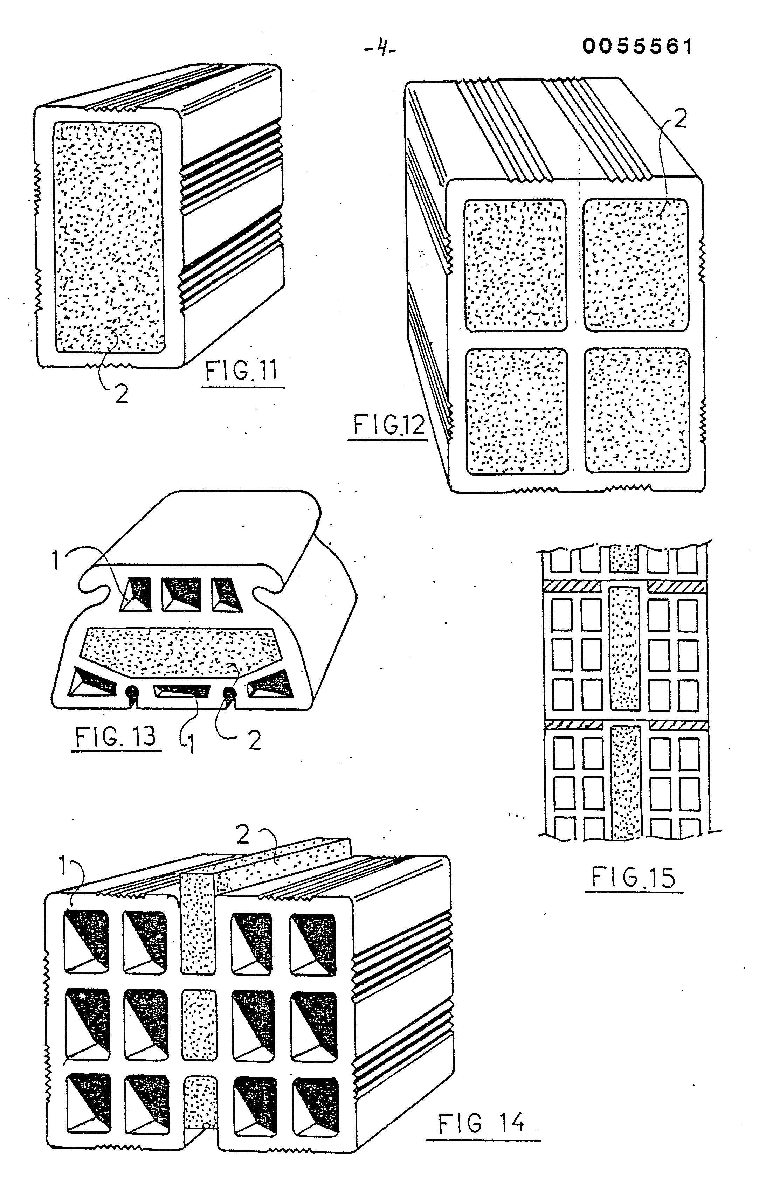

Finally, Figures 9 to 12 and 14 show some cases of special constructions, with a central core of insulating material surrounded by air channels (Fig. 9), with four corner cores of insulating material and one central air channel (Fig. 10), or without an air channel (Fig. 12), and which a solid rectangular or square central core of insulation material (Fig 11).

It is apparent that all of these forms of bricks are purely illustrative, in that the invention can be applied to bricks of any form, e.g. triangular, semicircular or also completely irregular, in accordance with existing actual needs. An interesting irregular form of brick is shown in Figure 13, which shows a brick specially adapted for prefabricated plates and ceilings in multistorey buildings.

As mentioned above Figure 15 shows the way in which the bricks according to the invention form a wall having a central insulating layer.

The invention is not limited to specific dimensions of the bricks or of the insulating material. These are determined in each case to provide, in combination with the coefficients of heat transmission or sound insulation of other materials used together with the bricks, e.g. the mortar, plaster or other coatings, and with the coefficient of the material from which the bricks are made, the desired total coefficient of heat transmission K (or coefficient of sound insulation) for the masonry, the ceiling or the plate which is produced. It should be noted that the material from which the bricks are made, e.g. pure clay or clay with different additives, affects the coefficient K considerably.

CLAIMS

1.      A clay brick characterised in that one or more layers of heat insulating material are permanently incorporated in the inside and/or on the outside of the brick.

2.      A brick as claimed in claim 1, characterised in that the insulating material is incorporated in the brick internally by injection, pressing and/or glueing in a suitable gap in the body of the brick or is incorporated externally by injecting or glueing a strip of insulating material longitudinally over the brick.

3.      A brick as claimed in claim 1 or 2, characterised in that the insulating material is capable of being injected and then set or is capable of being glued with complete adhesion to the clay of the brick.

4.      A brick as claimed in claim 3, characterised in that the insulating material is polyurethane, PVC, Felisol, Bettocel or a combination thereof.

5.      A brick as claimed in any of claims 1 to 4, characterised in that the gap for receiving the insulating material or the thickness of the insulating material layer is, such that a particular desired coefficient of heat transmission or sound insulation is obtained in the bricks.

6       A brick as claimed in any of claims 1 to 5, characterised in that the insulating material is provided in the form of a central core, or in the form of two or more cores.

7.      A brick as claimed in any of claims 1 to 6, characterised in that it is provided with a rectangular or approximately semicircular protrusion.

8.      A method for the production of clay bricks by moulding, firing and cooling the brick characterised in that the bricks are adjusted after firing to a suitable temperature for the incorporation of an insulating material, an insulating material is permanently incorporated in the inside and/or on the outside of the bricks by injection or pressing and glueing and the bricks are subsequently allowed to stand for a period of time sufficient for insulating material to set and/or become bonded to the clay.

9.      A method as claimed in claim 8 characterised in that the insulating material is polyurethane, the bricks are adjusted after firing to a temperature of about 40°C and the bricks are allowed to stand after incorporation of the insulating material for about 20 hours.

0055561

FIG.1

FIG. 2

FIG. 3

0055561

FIG. 4

FIG. 5

FIG.6

FIG. 7

D

1

2

FIG. 8

2

D

1

FIG. 9

1

2

FIG. 10

2

1

FIG.11

FIG.12

FIG. 13

FIG 14

FIG.15

0055561

European Patent Office

**EUROPEAN SEARCH REPORT**

Application number

EP 81 30 5951

| | DOCUMENTS CONSIDERED TO BE RELEVANT | | CLASSIFICATION OF THE APPLICATION (Int. Cl. ³) |
|---|---|---|---|
| Category | Citation of document with indication, where appropriate, of relevant passages | Relevant to claim | |
| X | <u>FR - A - 2 307 096</u> (COMBETTE) <br> * Page 2, lines 9-40; page 3, lines 1-17; figures 1-7 * | 1,2,3, 4,6 | E 04 C 1/40 <br> E 04 B 1/78 <br> B 28 B 11/04 |
| | -- | | |
| X | <u>FR - A - 2 254 945</u> (SCHAEFFER) <br> * Page 2, lines 17-37; page 3, lines 1-7; figures 1,2 * | 1,2,3 | |
| | -- | | |
| X | <u>AT - B - 340 640</u> (EBENSEER) <br> * Page 3, lines 35-60; page 4, lines 1-31; figures 1-3 * | 1,2,4, 5,6 | TECHNICAL FIELDS SEARCHED (Int.Cl. ³) <br><br> E 04 C |
| | -- | | |
| X | <u>FR - A - 2 201 377</u> (TUILERIES DE MARSEILLE) <br> * Page 1, lines 38-40; page 2, lines 1-18; page 4, lines 29-40; page 5, lines 1-2; figure 3 * | 1,2,4, 6,7 | |
| | -- | | |
| X | <u>FR - A - 2 311 148</u> (COMMUNEAU) <br> * Page 1, lines 20-40; page 2, lines 20-40; page 3, lines 1-15; figures 1-2 * | 1,2,3, 4,6,8 | |
| | ---- | | |

| The present search report has been drawn up for all claims | | |
|---|---|---|
| Place of search <br> The Hague | Date of completion of the search <br> 28-05-1982 | Examiner <br> DALL' ANESE |

EPO Form 1503.1 06.78